(19) Europäisches Patentamt
European Patent Office
Office européen des brevets

(11) Veröffentlichungsnummer: **0 518 122 B1**

(12) **EUROPÄISCHE PATENTSCHRIFT**

(45) Veröffentlichungstag der Patentschrift: **22.03.95**

(51) Int. Cl.[6]: **C08L 63/10**, C08L 75/14, C08F 299/02

(21) Anmeldenummer: **92108889.4**

(22) Anmeldetag: **27.05.92**

(54) **Eingedickte härtbare Formmassen aus einem Vinylester- oder Vinylesterurethanharz.**

(30) Priorität: **13.06.91 DE 4119434**

(43) Veröffentlichungstag der Anmeldung:
**16.12.92 Patentblatt 92/51**

(45) Bekanntmachung des Hinweises auf die Patenterteilung:
**22.03.95 Patentblatt 95/12**

(84) Benannte Vertragsstaaten:
**AT DE ES FR GB IT NL SE**

(56) Entgegenhaltungen:
**EP-A- 0 028 841**
**EP-A- 0 319 203**
**FR-A- 2 101 018**
**US-A- 3 637 911**
**US-A- 4 263 199**

**WORLD PATENTS INDEX LATEST Derwent Publications Ltd., London, GB; AN 82-44392E & JP-A-800 141 134 (NIPPON SOKUBAI KAGAKU) 21. April 1982**

(73) Patentinhaber: **BASF Aktiengesellschaft**
**Carl-Bosch-Strasse 38**
**D-67063 Ludwigshafen (DE)**

(72) Erfinder: **Heese, Anton, Dr.**
**Peter-Nickel-Strasse 15**
**W-6940 Weinheim (DE)**
Erfinder: **Cramer, Edwin, Dr.**
**Hohenzollernstrasse 87 a**
**W-6700 Ludwigshafen (DE)**
Erfinder: **Georg, Gerhard**
**Dietlindstrasse 44**
**W-6700 Ludwigshafen (DE)**
Erfinder: **Potthoff-Karl, Birgit, Dr.**
**Gruenerstrasse 7**
**W-6700 Ludwigshafen (DE)**

**EP 0 518 122 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft härtbare Formmassen aus einem Vinylester- oder Vinylesterurethanharz, das mit einem üblichen Eindickmittel eingedickt wurde.

Vinylester- und Vinylesterurethanharze enthalten gewöhnlich keine Carboxylgruppen; sie können deshalb mit den üblichen Eindickmitteln auf Basis von Metallverbindungen wie z.B. Magnesiumoxid keine viskositätserhöhenden Ionomeren bilden, so daß sie nicht ohne weiteres eingedickt werden können.

Man hat daher versucht, eine Eindickung dieser Harze auf anderen Wegen zu erreichen. Nach US-A 3 466 259 werden Carboxylgruppen in Vinylesterharze eingeführt, indem man deren sekundäre Hydroxylgruppen mit Dicarbonsäureanhydriden umsetzt. Dies erfordert aber eine zusätzliche aufwendige Reaktionsstufe. Nach EP-A 308 745 gelingt das Eindicken von Vinylester- und Vinylesterurethanharzen durch Zumischen von Isocyanaten und primären aromatischen Aminen. Diese Arbeitsweise hat den Nachteil, daß mit feuchtigkeitsempfindlichen Substanzen gearbeitet werden muß.

Der Erfindung lag daher die Aufgabe zugrunde, eine einfache und unproblematische Methode zum Eindicken von carboxylgruppenfreien Vinylester- und Vinylesterurethanharzen bereitzustellen.

Diese Aufgabe wird erfindungsgemäß dadurch gelöst, daß dem Vinylester- bzw. Vinylesterurethanharz 0,5 bis 15 %, bezogen auf sein Gewicht, eines mit dem Harz verträglichen Säuregruppen enthaltenden thermoplastischen Vinylpolymeren mit einer Säurezahl zwischen 15 und 150 und einem K-Wert zwischen 15 und 60 zugemischt und die Eindickung mit üblichen Eindickmitteln auf Basis einer Metallverbindung vorgenommen wird.

Gegenstand der Erfindung ist demzufolge eine härtbare, eingedickte Formmasse, enthaltend

A. 100 Gew.-Teile eines Vinylester- oder Vinylesterurethanharzes,
B. 0 bis 120 Gew.-Teile eines mit A verträglichen ungesättigten Polyesterharzes,
C. 0,5 bis 25 Gew.-Teile eines mit A verträglichen, Säuregruppen enthaltenden thermoplastischen Vinylpolymeren mit einer Säurezahl (acidimetrisch nach DIN 53 402) zwischen 15 und 150 und einem K-Wert (1 %ig in Cyclohexanon nach DIN 51 562, Teil 1 + 3) zwischen 15 und 60,
D. 0,1 bis 10 Gew.-Teile einer basischen Metallverbindung als Eindickmittel,
E. 0,01 bis 5 Gew.-Teile eines bei Temperaturen oberhalb von 50 °C zerfallenden Polymerisationsinitiators,
F. 0 bis 400 Gew.-Teile Verstärkungsfasern und/oder Füllstoffe.

In US-A 3 718 714 sind eindickfähige Polyesterharze (Kondensationsprodukte von ungesättigten Dicarbonsäuren und Polyolen) beschrieben, die 1 bis 60 Gew.-% eines carboxylgruppenhaltigen Polyvinylacetats enthalten. Dieses "low-profile"-Additiv soll die Oberflächeneigenschaften von ausgehärteten Formteilen verbessern. Von einem Einfluß auf die Eindickfähigkeit der Polyesterharze ist nicht die Rede, er wäre hier auch nicht erforderlich, da die beschriebenen Harze Carboxylgruppen aufweisen und problemlos eindicken.

Zu den einzelnen Komponenten ist folgendes zu sagen:

A. Vinylester- und Vinylesterurethanharze sind bekannt. Ihnen ist gemeinsam, daß sie Vinylesterendgruppen

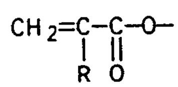

enthalten und frei von Carboxylgruppen sind. Sie liegen im allgemeinen als flüssiges Reaktivsystem in Mischung mit bis zu 60 Gew.-%, vorzugsweise 10 bis 45 Gew.-% an copolymerisierbaren Monomeren vor. Monomerfreie Harze sind im Rahmen der vorliegenden Erfindung grundsätzlich auch geeignet, hier müssen dann allerdings beim Einarbeiten der Eindickmittel und bei der Weiterverarbeitung erhöhte Temperaturen angewandt werden, ohne daß dabei aber eine vorzeitige Polymerisation eingeleitet wird.

Unter Vinylesterharzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Kennzeichnend für die Klasse der Vinylesterharze ist die Gruppe

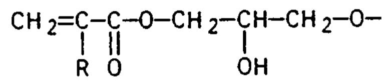

mit R = H oder $CH_3$.

Die zur Herstellung der Vinylester verwendeten Epoxidharze leiten sich von mehrwertigen Phenolen und Alkoholen ab. Die Epoxidäquivalentgewichte können zwischen 60 und 2000 liegen. Bevorzugte Epoxidharze sind die Glycidylether auf Basis von Bisphenol A mit Epoxidäquivalentgewichten von 140 bis 1000. Als weitere Gruppe von Polyepoxiden kommen solche auf Basis von kernhydriertem Bisphenol A und Bisphenol F, 2,2-Bis-(4-hydroxycyclohexyl)propan bzw. Bis-(4-hydroxycyclohexyl)methan, sowie epoxidierte Cycloolefine in Frage. Weiterhin stellen Polyglycidylether von Novolakharzen eine wichtige Gruppe von Epoxidharzen dar. Darunter fallen die Kondensationsprodukte von Phenol oder Kresol mit Aldehyden wie Formaldehyd oder Butyraldehyd ebenso wie Additionsprodukte von Phenol oder substituierten Phenolen mit Olefinen wie Dicyclopentadien, Isopren oder Norbornen. Weiterhin zählen zur Gruppe der bevorzugten Epoxidharze solche, die sich von Alkylenpolyphenolen ableiten, wie z.B. Bis-(4-hydroxyphenyl)methan, 1,1,2,2-Tetrakis-(4-hydroxyphenyl)ethan oder 1,1,3-Tris-(4-hydroxyphenyl)propan. Beispielhaft für Epoxidharze auf Basis mehrwertiger aliphatischer Alkohole seien genannt die Polyglycidylether von 1,4-Butandiol, 1,6-Hexandiol, Trimethylolpropan und Poly-THF.

Vinylesterurethanharze sind bekannt, z.B. aus US-A 3 297 745, US-A 3 772 404, US-A 4 618 658, GB-A 2 217 722 und DE-A 37 44 390. Sie weisen im allgemeinen folgende Gruppen auf:

a)

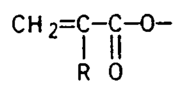

(mit R = H oder $CH_3$)

b)

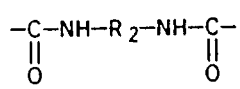

(mit $R_2$ = zweiwertiger aliphatischer, aromatischer oder cycloaliphatischer Rest mit 4 bis 40 C-Atomen, vorzugsweise ein aromatischer Rest mit 6 bis 20 C-Atomen),

gegebenenfalls

c) $-O-R_3-O-$

(mit $R_3$ = zweiwertiger aliphatischer, cycloaliphatischer oder aromatischer Rest mit 2 bis 500 C-Atomen, vorzugsweise ein aliphatischer Rest mit 4 bis 100 C-Atomen),

sowie gegebenenfalls

d) $-NH-R_4-NH-$

(mit $R_4$ = aliphatischer, cycloaliphatischer oder aromatischer Rest mit 2 bis 100 C-Atomen).

Vorzugsweise ist das Vinylesterurethanharz ein Umsetzungsprodukt aus

- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,

wobei bei der Umsetzung das Gewichtsverhältnis Isocyanat zu (Alkohol + Amin) zwischen 100:0 und 100:300 betrug und das Äquivalentverhältnis Hydroxyalkyl(meth)acrylat zu den freien Isocyanatgruppen des Umsetzungsproduktes zwischen 3:1 und 1:2 lag.

Zur Herstellung der Vinylesterurethanharze kommen alle bekannten aliphatischen, cycloaliphatischen und aromatischen Polyisocyanate mit mindestens 2 Isocyanatgruppen pro Molekül in Frage. Beispielhaft für aliphatische Isocyanate seien genannt: Hexamethylendiisocyanat, Cyclohexandiisocyanat, Isophorondiisocyanat und Dicyclohexylmethandiisocyanat. Zur Gruppe der aromatischen Isocyanate zählen z.B. Diphenylmethandiisocyanat und Diisocyanato-toluol mit ihren Isomerengemischen, Polyphenyl-polymethylenpolyisocyanate (Roh-MDI) sowie Diisocyanatonaphthalin. Anwendbar sind auch Triisocyanate, wie Triisocyanatotoluol, Triisocyanatodiphenylmethan, sowie trimerisierte, Isocyanuratgruppen enthaltende Polyisocyanate, z.B. auf Basis von Hexamethylendiisocyanat oder dem Isomerengemisch von Diphenylmethandiisocyanat.

Ebenfalls geeignet sind urethangruppenhaltige Isocyanate, die durch Umsetzung von mehrwertigen Alkoholen mit Isocyanaten hergestellt werden. Als mehrwertige Alkohole kommen sowohl kurzkettige Alkohole wie beispielsweise Ethandiol oder Glycerin als auch höhermolekulare Verbindungen wie Polyether- und Polyesterole in Frage. Bevorzugte Isocyanate sind 4,4'-Diphenylmethandiisocyanate sowie das Isomerengemisch aus 2,2'- und 4,4'-Diphenylmethandiisocyanat.

Geeignete mehrwertige Alkohole sind: aliphatische Diole, wie Ethandiol-1,2, Propandiol-1,2, Butandiol-1,4, Dipropylenglykol, Neopentylglykol, Trimethylolpropan, Pentaerythrit; alicyclische Diole, wie hydriertes Bisphenol A, Cyclohexandiol, Cyclohexandimethanol und Tricyclohexandimethanol; Phenole wie Bisphenol A oder Resorcin; alkoxylierte Derivate von Bisphenolen wie z.B. Bisphenol A, Bisphenol S oder Bisphenol F; aliphatische oder aromatische Polyetherole mit Molekulargewichten bis 5000, z.B. Polyethylenglykol oder Polypropylenglykol; sowie Polyesterole, wobei sowohl gesättigte als auch ungesättigte hydroxyterminierte Polyester in Frage kommen. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

Als Polyamine können sowohl aliphatische wie auch aromatische Amine eingesetzt werden. Beispielhaft seien genannt: Ethylendiamin, Diethylentriamin, Bis-(4-aminocyclohexyl)-methan, Diaminodiphenylmethan, Diaminodiphenylsulfon. Besonders geeignete Amine sind langkettige Amine mit Molekulargewichten von 150 bis 5000. Dazu zählen Etherdiamine wie 4,7-Dioxadecan-1,10-diamin oder Verbindungen der allgemeinen Formel

$H_2N-(C_3H_6O)_m-C_3H_6-NH_2$,

wobei m Zahlen von 2 bis 80 bedeutet, oder Verbindungen der allgemeinen Formel

$H_2N-C_3H_6-O-[(CH_2)_4O]_n-C_3H_6-NH_2$,

wobei n Zahlen von 5 bis 80 bedeutet; weiterhin die Aminobenzoesäureester und Anthranilsäureester von Diolen wie z.B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur:

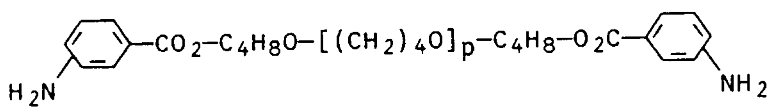

wobei p Zahlen von 5 bis 80 bedeutet.

Zum Aufbau der endständigen Doppelbindungen im Vinylesterurethan werden Hydroxyalkyl-(meth)-acrylate mit den Isocyanatgruppen enthaltenden Verbindungen umgesetzt. Hydroxyalkyl-(meth)acrylate werden durch folgende allgemeine Formel beschrieben:

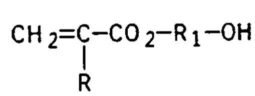

wobei R = H oder $CH_3$
und $R_1$ eine Alkylengruppe bedeuten. Hydroxyalkyl(meth)acrylate werden durch Umsetzung von (Meth)-Acrylsäure mit Alkylenoxiden wie Ethylen- oder Propylenoxid hergestellt. Geeignete Hydroxyalkyl(meth)-acrylate im Sinne der Erfindung sind ferner Glycerindi-(meth)acrylate, Trimethylolpropandi(meth-)acrylate und Pentaerythrittri-(meth-)acrylate. Bevorzugt sind Hydroxypropyl(meth-)acrylat und Hydroxyethyl(meth-)acrylat.

Zur Herstellung der modifizierten Vinylesterurethanharze sind verschiedene Verfahren möglich. Einmal wird zunächst das Isocyanat mit dem Hydroxyalkyl-(meth)acrylat vorreagiert und gegebenenfalls anschließend mit dem mehrwertigen Alkohol und/oder dem Polyamin umgesetzt. In einem zweiten Verfahren werden alle Komponenten in einer Eintopfreaktion zusammengegeben und umgesetzt. Im dritten Verfahren werden Isocyanat, Polyol und Polyamin vermischt und bei 40 bis 110 °C umgesetzt. Anschließend wird die zur Absättigung der Isocyanatgruppen notwendige Menge an Hydroxyalkyl-(meth-)acrylat zugefügt. Das Reaktionsende wird entweder spektroskopisch oder titrimetrisch durch die Abnahme der Isocyanatgruppe angezeigt. Eventuell vorhandenes, überschüssiges Polyisocyanat reagiert dabei mit dem Hydroxyalkyl(meth)acrylat zu einem verhältnismäßig niedermolekularen Vinylesterurethan, was zur Einstellung der Viskosität des Harzes ausgenutzt werden kann. Man erhält stets ein Gemisch präpolymerer Vinylesterurethane mit unterschiedlicher Kettenlänge und Molekulargewicht.

Geeignete Monomere, die in den Vinylester- oder Vinylesterurethanharzen enthalten sein können, sind copolymerisierbare Vinyl- und Allylverbindungen. Bevorzugt sind Vinylbenzole, insbesondere Styrol; Ester der Acryl- und Methacrylsäure, z.B. Methylacrylat, Ethylacrylat, Butylacrylat, Butandioldiacrylat, Propylenglykoldimethacrylat, Trimethylolpropantriacrylat und Methylmethacrylat; Allylverbindungen, wie Diallylphthalat, Diallylether, Allylphenole und Allylphenolether; Vinylpyridin und Vinylpyrrolidon.

B. Die unsgesättigten Polyesterharze liegen im allgemeinen als Lösungen von 80 bis 40 Gew.-% ungesättigter Polyester in 20 bis 60 Gew.-% eines copolymerisierbaren Monomeren vor. Die Polyester sind Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Als copolymerisierbare Monomere kommen wieder die üblichen Allyl- und Vinylverbindungen in Frage, vorzugsweise Styrol.

Die Säurezahl des ungesättigten Polyesterharzes sollte unterhalb von 100, insbesondere zwischen 0 und 50 liegen. Besonders bevorzugt sind Polyesterharze aus Maleinsäure, gegebenenfalls zusammen mit o-Phthalsäure einerseits und Diolen, wie Dipropylenglykol, Diethylenglykol und/oder Propandiol-1,2 andererseits, gelöst in Styrol.

Das ungesättigte Polyesterharz B muß mit dem Vinylester- bzw. Vinylesterurethanharz A verträglich sein. In der erfindungsgemäßen Formmasse ist es in Mengen von 0 bis 120, vorzugsweise von 5 bis 100 Gew.-Teilen, bezogen auf 100 Gew.-Teile A, enthalten. Es erhöht die Verträglichkeit zwischen dem Vinylester- bzw. Vinylesterurethanharz A und Eindickhilfsmittel C. Läßt man das ungesättigte Polyesterharz fort, dann besteht in manchen Fällen die Gefahr, daß sich nach einiger Zeit auf der eingedickten Formmasse eine Flüssigkeitsschicht abscheidet, die zum größten Teil aus Monomeren besteht.

C. Die erfindungsgemäße Formmasse enthält 0,5 bis 25, vorzugsweise 1 bis 15 Gew.-Teile, bezogen auf A, eines mit A verträglichen, Säuregruppen enthaltenden thermoplastischen Vinylpolymeren mit einer Säurezahl zwischen 15 und 150, insbesondere zwischen 25 und 80 und einem K-Wert zwischen 15 und 60, insbesondere zwischen 20 und 40.

Geeignete Vinylpolymere sind z.B. Copolymerisate von Vinylestern, wie Vinylacetat und Vinylpropionat mit ungesättigten organischen Säuren, wie Crotonsäure, Acrylsäure, Methacrylsäure, Maleinsäure, Maleinsäurehalbestern und Vinylsulfonsäuren. Auch entsprechende Copolymerisate von anderen Vinylmonomeren, wie Vinylpyrrolidon, Vinylcaprolactam, Methylmethacrylat, tert.-Butylacrylat und Styrol mit ungesättigten Säuren können eingesetzt werden. Geeignet sind auch Block- und Pfropfcopolymerisate von thermoplastischen Vinylpolymeren mit den genannten ungesättigten Säuren, sowie teilweise hydrolysierte Polyvinylester.

D. Die Formmasse enthält 0,1 bis 10, vorzugsweise 0,5 bis 8 Gew.-Teile, bezogen auf A, eines üblichen Eindickmittels auf Basis einer basischen Metallverbindung. Bevorzugt sind dabei Oxide, Hydroxide, Alkoholate und Salze organischer Säuren von Metallen der 1. bis 3. Hauptgruppe, insbesondere MgO, $Mg(OH)_2$, CaO, $Ca(OH)_2$, BaO, $Li_2O$, LiOH, Mg- und AL-Alkoholate, Al-Ethylhexanoat und Al-Benzoat. Geeignet sind auch einige übergangsmetallverbindungen, wie z.B. ZnO.

Wie bei ungesättigten Polyesterharzen läßt sich auch hier die Eindickung durch Zusatz von polaren Verbindungen beschleunigen, z.B. durch Hydroxylverbindungen, wie Wasser, Propylenglykol, Glycerin, durch Carbonsäuren und deren Anhydride, wie Benzoesäure, Cyclohexancarbonsäure, Hexahydrophthalsäureanhydrid, sowie durch Halogenide, wie Cholinchlorid und Lithiumhalogenide.

E. Als Polymerisationsinitiatoren werden übliche, bei Temperaturen oberhalb von 50 °C in Radikale zerfallende Peroxide eingesetzt. Ihre Halbwertszeit bei 50 °C soll vorzugsweise größer als 100 h sein. In

Frage kommen Diacylperoxide, Peroxydicarbonate, Peroxyester, Perketale, Ketonperoxide, Hydroperoxide und Dialkylperoxide. Beispielhaft seien genannt: Succinylperoxid, Diacetylperoxid, Benzoylperoxid, t-Butylperoktoat, p-Chlorbenzoylperoxid, t-Butylperisobutyrat, 3,5,5-Trimethylcyclohexanonperketal, 2,5-Dimethylhexan-2,5-diperbenzoat, t-Butylperacetat, t-Butylperisononanat, Di-t-butyl-diperphthalat, 2,2-Bis-(t-butylperoxy)-butan, t-Butylperbenzoat, Dicumylperoxid, 2,5-Dimethyl-2,5-bis-(t-butylperoxy)-hexan, t-Butylhydroperoxid, Cumolhydroperoxid, Di-t-butylperoxid, 2,5-Dimethyl-2,5-bis-(t-butylperoxy)hexin, 1,1,4,4,7,7-Hexamethyl-cyclo-4,7-diperoxynonan, Diamylperoxid, t-Butylperethylhexanoat, Di-lauroylperoxid, t-Butylcumylperoxid, $\gamma$-t-Butylperoxyvalerolacton, Dimyristylperoxydicarbonat, Bis(4-t-butylcyclohexyl)peroxydicarbonat. Auch CC-labile Verbindungen und Azoverbindungen sind geeignet. Nicht geeignet sind Initiatoren, die unterhalb von 50 °C zerfallen. Sie verringern die Lagerstabilität und führen zu vorzeitiger Gelierung der Formmasse. Ein Beispiel für einen derartigen Initiator ist Acetylacetonperoxid. Die sogenannten kalthärtenden Systeme haben ebenfalls eine zu geringe Lagerstabilität. Die Polymerisationsinitiatoren werden in Mengen von 0,01 bis 5, vorzugsweise von 0,5 bis 3 Gew.-Teilen, bezogen auf A, zugesetzt.

F. Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern mit einer Länge von bis zu 5 cm oder als gemahlene Fasern vorliegen, bevorzugt aber als Langfasern in Form von Einzelrovings, Bahnen aus parallelen Rovings, Fasermatten, Faservliese, Fasergewebe oder Fasergewirke.

Die Fasern werden in Mengen von 0 bis 400 Gew.%, vorzugsweise von 30 bis 350 Gew.%, bezogen auf A, eingesetzt. Bei Glasfasermatten beträgt der besonders bevorzugte Glasgehalt 100 bis 300 Gew.%, bezogen auf A, bei Rovings 30 bis 150 Gew.% und bei unidirektionalen Fasergelegen 150 bis 350 Gew.%.

Geeignete Füllstoffe sind z.B. übliche feinpulvrige oder körnige Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen. Ihr Gehalt beträgt vorzugsweise 5 bis 300 Gew.%, bezogen auf A.

G. Als weitere Zusatzstoffe kommen die üblichen Inhibitoren, insbesondere Phenole, Chinone oder Nitrosoverbindungen, Gleitmittel, wie z.B., Wachse, Paraffine zur Vermeidung der Oberflächenverdunstung, sowie Flammschutzmittel und Formtrennmittel in Frage.

Die erfindungsgemäßen Formmassen sind eingedickte, klebfreie, unvernetzte, lagerstabile Massen, die in flächiger, teigiger oder granulierter Form vorliegen können. Ihre Viskosität mit 150 Teilen Calciumcarbonat (®Millicarb) auf 100 Teile A + B bei 23 °C soll mindestens 500.000 mPa.s, vorzugsweise mindestens 4.000.000 mPa.s, betragen, gemessen mit einem Brookfield-Viskosimeter.

Bei geringerer Viskosität können die Massen nicht mehr als klebfrei bezeichnet werden, man bekommt dann Schwierigkeiten bei der Verarbeitung. Bevorzugt soll die Viskosität zwischen $2 \cdot 10^6$ und $200 \cdot 10^6$ mPa.s liegen. Oberhalb von $200 \cdot 10^6$ mPa.s sind die Massen schon fest und hart, auch hier bekommt man Schwierigkeiten mit der Verarbeitung. Solche festen Massen können grundsätzlich durch Erhöhung der Temperatur verarbeitet werden, wobei aber dann die Gefahr vorzeitiger Vernetzung auftritt.

Unvernetzt bedeutet, daß kein dreidimensionales Molekülnetzwerk mit Atombindungen vorliegen darf. Praktisch kann die Vernetzung dadurch festgestellt werden, daß man versucht, die Masse in geeigneten organischen Lösungsmitteln, vorzugsweise in Dimethylformamid, Dimethylsulfoxid oder Aceton gegebenenfalls unter Erwärmen, zu lösen. Dabei dürfen höchstens 10 Gew.%, vorzugsweise weniger als 1 Gew.% der Masse, mit Ausnahme natürlich der Verstärkungsfasern und Füllstoffe, als unlöslicher Rückstand verbleiben.

Lagerstabil bedeutet, daß die Formmasse bei mindestens eintägiger Lagerung bei Raumtemperatur noch unvernetzt, d.h. löslich nach obiger Definition sein muß. Vorzugsweise sind die erfindungsgemäßen Formmassen länger lagerfähig, beispielsweise mehr als 30 Tage.

Ein bevorzugtes Verfahren zur Herstellung der erfindungsgemäßen Formmassen besteht darin, daß man die Komponenten A, B, C, E, F und G (mit Ausnahme von langen Verstärkungsfasern) vermischt, bei Temperaturen unterhalb von 50 °C die Komponente D zusetzt und dadurch die Eindickung einleitet, gegebenenfalls die noch fließfähige Masse auf Verstärkungsfasern aufbringt und dann die Eindickung zu Ende führt. Zur Beschleunigung der Eindickung kann es in manchen Fällen zweckmäßig sein, die Masse kurzzeitig auf Temperaturen unterhalb von 100 °C, vorzugsweise unterhalb von 50 °C zu erwärmen. Bis zur vollständigen Eindickung der Masse können mehrere Tage verstreichen, vorzugsweise ist sie aber in weniger als einem Tag praktisch beendet.

Es wird angenommen, daß beim Zusatz des Eindickmittels D dieses mit den Säuregruppen des Vinylpolymeren C zu einem Ionomeren reagiert, welches mit dem Harzsystem unverträglich ist, sich ausscheidet und dadurch die Viskosität erhöht. Im Gegensatz zur Eindickung üblicher ungesättiger

Polyesterharze steigt hier nach Zusatz des Eindickmittels die Viskosität verhältnismäßig rasch an und bleibt dann nach Erreichen des Maximalwertes praktisch konstant.

Die eingedickten Massen können längere Zeit bis zur Verarbeitung gelagert werden, wobei sie z.B. aufgewickelt gestapelt oder auch verpackt werden können. Zur Verarbeitung der Formmassen kommen das Pressen, Spritzpressen, Spritzgießen und Tiefziehen in Frage, wobei die Härtung bei Temperaturen oberhalb von 50°C, vorzugsweise zwischen 80 und 200°C und insbesondere zwischen 120 und 180°C durchgeführt wird.

Die in den Beispielen genannten Teile und Prozente beziehen sich auf das Gewicht.

Beispiele

Herstellung der Vinylesterharze

A1: 240 Teile des Bisphenol A-diglycidylethers Epikote 828 (Fa. Shell) und 580 Teile des Bisphenol A-diglycidylethers Epikote 1001 (Fa. Shell) wurden bei 95°C vermischt. Man versetzte dann die Schmelze mit 1 Teil Hydrochinon, 2 Teilen Benzyltributylammoniumchlorid und ließ bei 115°C mit 200 Teilen Methacrylsäure reagieren. Bei einer Säurezahl <6 wurde die Schmelze 60 %ig in Styrol gelöst und mit 450 ppm Hydrochinon stabilisiert.

A2: Zu 1520 Teilen Bisphenol A-diglycidylethers (Epikote 828, Fa. Shell), 0.72 Teilen Dimethylhydrochinon und 1.80 Teilen Dimethylbenzylamin wurden bei 85°C innerhalb von 45 Minuten 688 Teile Methacrylsäure zugesetzt, wobei die Temperatur auf 110°C gesteigert wurde. Nach fünf Stunden war die Säurezahl von 16.2 erreicht. Die Schmelze wurde in 1472 Teilen Styrol gelöst.

A3: 600 Teile des Bisphenol A-diglycidylethers Epikote 828 (Fa. Shell), 1200 Teilen des Novolak-Epoxidharzes Eposid 5038 (Duroplast-Chemie), 2 Teile Hydrochinon und 10 Teile Benzyltributylammoniumchlorid wurden bei 90°C innerhalb von 1 Stunde mit 790 Teilen Methacrylsäure versetzt. Während der Zulaufzeit erhöhte sich die Temperatur auf 110°C. Nach 4 Stunden Reaktionszeit wurde die Schmelze in 1360 Teilen Styrol gelöst und mit 1 Teil Hydrochinon stabilisiert.

Herstellung der Vinylesterurethanharze

A4: 130 Teile 4,4'-Diphenylmethandiisocyanat (Lupranat MS, BASF AG) werden bei 50°C in 90 Teilen Styrol gelöst. Man gibt 0,3 Teile Dibutylzinndilaurat zu und versetzt das Reaktionsgemisch mit 12 Teilen Polytetrahydrofuran, welches in 34 Teilen Styrol gelöst wird. Nach 10 Minuten werden bei 50°C 14 Teile Dipropylenglykol zugefügt und 15 Minuten nachgerührt. Danach dosiert man 120 Teile Hydroxypropylmethacrylat bei 50 bis 60°C zur Lösung und stabilisiert mit 0,1 Teil Hydrochinon. Es werden 10 Teile Styrol zugefügt.

A5: 372 Teile Diisocyanat-Präpolymer auf Basis 4,4'-Diphenylmethandiisocyanat (Lupranat MP 102, 23 % NCO, BASF AG), 0.22 Teile Hydrochinonmonomethylether und 0.55 Teile Dibutylzinndilaurat wurden in 451 Teilen Styrol gelöst und innerhalb von 20 Minuten mit 304,5 Hydroxypropylmethacrylat versetzt. Die exotherme Reaktion wurde durch Kühlung so gesteuert, daß die Temperatur der Mischung 55°C nicht überschritt. Nach 2stündigem Rühren bei 55°C wurde mit 0.11 Teilen Dimethylhydrochinon stabilisiert.

A6: 250 Teile 4,4'-Diphenylmethandiisocyanat wurden in 364 Teilen Styrol gelöst, mit 0.27 Teilen Dibutylzinndilaurat sowie 0.11 Teilen Hydrochinonmonomethylether versetzt und bei Raumtemperatur innerhalb einer Stunde 296 Teile Hydroxypropylmethacrylat zugetropft. Die Temperatur der Reaktionslösung wurde mit Hilfe eines Wasserbades 4 Stunden bei 60°C gehalten.

Herstellung der Polyesterharze

B1: Ein ungesättigter Polyester mit Säurezahl 29 und Schmelzviskosität (125°C) von 740 [mPa•s] wurde aus Maleinsäureanhydrid und Dipropylenglykol (Molverhältnis 1:1) durch Kondensation bei 185 bis 200°C hergestellt. Er wurde 60 %ig in Styrol gelöst und mit 120 ppm Hydrochinon stabilisiert.

B2: Ein ungesättigter Polyester mit Säurezahl 45 wurde hergestellt aus Maleinsäureanhydrid, Tetrahydrophthalsäureanhydrid und Diethylenglykol im Molverhältnis 1:0,5:1,5. Er wurde 65 %ig in Styrol gelöst und mit 120 ppm Hydrochinon stabilisiert.

B3: Ein ungesättigter Polyester mit Säurezahl 30 wurde in einem zweistufigen Verfahren hergestellt,

bei dem im ersten Schritt äquimolare Mengen Dicyclopentadien und Maleinsäure bei 125 bis 135 °C zum Maleinsäurehalbester umgesetzt und im Folgeschritt mit Ethylenglykol bei 190 °C kondensiert wird. Die Einsatzstoffe weisen ein Molverhältnis von Maleinsäure:Dicyclopentadien:Ethylenglykol von 1:1:0.55 auf. Der ungesättigte Polyester wurde 68 %ig in Styrol gelöst und mit 85 ppm Hydrochinon stabilisiert.

B4: Ein ungesättigter Polyester mit Säurezahl 31 wurde hergestellt durch Umsetzung von Maleinsäureanhydrid und Propylenglykol im Molverhältnis 1:1.03. Er wurde 65 %ig in Styrol gelöst und mit 120 ppm Hydrochinon stabilisiert.

Herstellung der Vinylpolymeren

C1: Terpolymer aus
20 % Vinylpyrrolidon
70 % tert.-Butylacrylat
10 % Methacrylsäure
Das Terpolymer wurde durch Lösungspolymerisation bei 78 °C in Ethanol hergestellt, wobei 0,8 % tert.-Butylperpivalat und die Monomeren getrennt innerhalb von 6 Stunden zudosiert wurden. Nach beendeter Reaktion wurde das Lösungsmittel im Vakuum entfernt und der Rückstand in Styrol gelöst und mit 100 ppm Hydrochinon sowie 200 ppm Dimethylchinon stabilisiert. Das erhaltene Terpolymerisat hat einen K-Wert (gemessen 1 %ig in Ethanol) von 25,6 und eine Säurezahl von 65. 40 Teile des Terpolymeren wurden in 60 Teilen Styrol gelöst, die Viskosität der Lösung bei 23 °C betrug 111 600 [mPa•s].

C2 bis C5:
Die Polymeren C2 bis C5 wurden durch Suspensionspolymerisation in Wasser bei etwa 90 °C hergestellt, wobei 0,7 % tert.-.Butylperocoat als Initiator und Mercaptoethanol als Regler dienten. Im Anschluß an die Polymerisation erfolgte eine Wasserdampfdestillation und die Isolierung der Polymerteilchen in Perlform. Sie wurden getrocknet, in Styrol bei ca. 80 °C gelöst und mit 100 ppm Dimethylchinon stablisiert. Die Tabelle 1 gibt die Zusammensetzung der Polymeren, ihre Eigenschaften, den Styrolgehalt und die Viskosität der Lösung an.

Tabelle 1

| Polymer | Zusammensetzung % | K-Wert | Säurezahl | Styrolgehalt % | Viskosität (23°C) mPas |
|---|---|---|---|---|---|
| C2 | 93,6 Vinylacetat<br>6,4 Crotonsäure | 29,7 | 45 | 60 | 958 |
| C3 | 90 Vinylacetat<br>10 Crotonsäure | 36 | 66 | 75 | 7557 |
| C4 | 50 Vinylacetat<br>40 Vinylpropionat<br>10 Crotonsäure | 36 | 66 | 60 | 7570 |
| C5 (Vergleich) | 98,8 Vinylacetat<br>1,2 Crotonsäure | 35 | 7,5 | 60 | 805 |

Herstellung der Formmassen

a) Zur Prüfung des Eindickverhaltens flüssiger Reaktivharze wurden jeweils 100 Teile einer Mischung aus den Harzen A und B und einer Lösung des Polymeren C mit 100 Teilen Füllstoff-Kreide (Millicarb®)

und 3.75 Teilen Magnesiumoxidpaste (Luvatol MK 35, 35 %ig an MgO, Fa. Lehmann & Voss) mit einem schnell laufenden Rührwerk intensiv vermischt. Die Proben wurden dicht verschlossen bei 23 ° C gelagert und die Viskosität der Massen zeitlich verfolgt. Gemessen wurde mit dem Viskosimeter HBT-D, Modell DV-II (Fa. Brookfield). Tabelle 2 zeigt, daß die erfindungsgemäßen Zubereitungen einen sehr schnellen Viskositätsanstieg zu einem konstanten Plateau (im Rahmen der Meßgenauigkeit) erfahren. Die Vergleichsversuche 4 und 5 ohne die Modifizierung mit den erfindungsgemäßen Polymeren führen nicht zu klebfreien Produkten, da sich die Viskosität der Pasten in Gegenwart von Magnesiumoxid nur geringfügig ändert.

Tabelle 2

| Versuche | 1 | 2 | 3 | 4 V | 5 V | 6 | 7 | 8 | 9 | 10 | 11 | 12 | 13 | 14 |
|---|---|---|---|---|---|---|---|---|---|---|---|---|---|---|
| Teile Harz A4 | 74 | 72 | 60 | 80 | 70 | | | | | | | | 40 | |
| Teile Harz A5 | | | | | | 64 | | | | | | | | |
| Teile Harz A1 | | | | | | | 74 | 74 | 74 | 64 | | 36 | 40 | 76 |
| Teile Harz A3 | | | | | | | | | | | 72 | 36 | | |
| Teile Harz B1 | 16 | 18 | 15 | 20 | 30 | 16 | 16 | 16 | 16 | 16 | | | | |
| Teile Harz B2 | | | | | | | | | | | 18 | 18 | 10 | 5 |
| Teile Polymer C1 | | | | | | | 4 | | | | | | | |
| Teile Polymer C2 | | 4 | 10 | | | 8 | | | | | 4 | 4 | 4 | 7,6 |
| Teile Polymer C3 | | | | | | | | | 2,5 | 5 | | | | |
| Teile Polymer C4 | 4 | | | | | | | 4 | | | | | | |
| Viskositätsverlauf bei Lagerung bei 23°C [mPa·s] x $10^6$ | | | | | | | | | | | | | | |
| 1d | 54,2 | 18,2 | 129 | 0,05 | 0,07 | 63,6 | 4,1 | 34,8 | 44,6 | 127 | 14,7 | 23,6 | 31,6 | 33,2 |
| 7d | 57,4 | 51,3 | 128 | 0,13 | 0,64 | - | 22,0 | 44,8 | 56,8 | 137 | 53,6 | 78,2 | 47,6 | 56,6 |
| 14d | 57,2 | 59,2 | 124 | 0,20 | 1,44 | 108 | 23,6 | 44,3 | 58,4 | 138 | 75,8 | 79,2 | 45,2 | 55,2 |
| 21d | 61,4 | 64,2 | | 0,23 | 2,44 | 104 | 31,4 | 44,1 | 58,2 | 136 | - | 80,2 | 46,1 | 62,3 |
| 28d | 61,6 | 59,0 | | | 2,99 | 108 | | 41,2 | 58,0 | 133 | 64,6 | 82,8 | 58,6 | 62,3 |

b) Zum Vergleich des Eindickverhaltens erfindungsgemäßer Reaktivsysteme mit solchen auf Basis von Polymeren mit geringem Säuregehalt, wie sie für Niederschrumpfsysteme üblich sind, wurden jeweils 100 Teile Mischung aus Harz A6 und Polymerlösungen C2 bzw. C5 sowie Mischungen aus VU-Harz A6, UP-Harz B3 und oben genannten Polymerlösungen mit 120 Teilen Kreide Millicarb® intensiv verrührt und dabei mit 3.75 Teilen MgO-Paste Luvatol MK 35 versetzt. Die Proben wurden luftdicht verschlossen,

bei Raumtemperatur gelagert und die Pastenviskosität mit der Zeit verfolgt.

Tabelle 3 gibt Auskunft über die Zusammensetzung der Reaktivharze sowie über den zeitlichen Viskositätsverlauf während der Lagerung. Die Ergebnisse zeigen klar den Vorteil erfindungsgemäßer Reaktivsysteme (Versuche 15 und 17). Während sie innerhalb von 1 bis 2 Tagen klebefreie, feste Formmassen bei der Eindickung mit MgO liefern, bleiben die Vergleichssysteme (Versuche 16 und 18) nach über 30 Tagen unter gleichen Bedingungen noch klebrig bis zähflüssig.

Tabelle 3

| Versuche | 15 | 16 V | 17 | 18 V |
|---|---|---|---|---|
| Teile Harz A6 | 80 | 80 | 40 | 40 |
| Teile Harz B3 | | | 40 | 40 |
| Teile Polymer C2 | 8 | | 8 | |
| Teile Polymer C5 | | 8 | | 8 |
| Viskositätsverlauf [mPas]$\cdot 10^6$ bei Lagerung bei 23 °C | | | | |
| 1d | 29 | 0.9 | 14.6 | 0.20 |
| 7d | 42.8 | 5.8 | 72.0 | 0.51 |
| 14d | 40.2 | 9.5 | 81.2 | 0.65 |
| 21d | 38.3 | 13.1 | 89.6 | 1.20 |
| 28d | 42.2 | 14.0 | 106.0 | 1.30 |
| Konsistenz der Formmasse | fest trocken | klebrig | fest trocken | klebrig zähfl. |

c) Herstellung und Verarbeitung von SMC-Massen

c1) Eine Harz-Füllstoffmischung wurde aus folgenden Komponenten mit einem schnell laufenden Rührwerk hergestellt:

64 Teile Harz A4
16 Teile Harz B1
8 Teile Polymer C2 in 12 Teilen Styrol
1,5 Teile tert.-Butylperbenzoat
4,5 Teile Zinkstearat
3,0 Teile amorphe Kieselsäure (Aerosil 200, Fa. Degussa)
0,03 Teile p-Benzochinon
100 Teile Füllstoff Kreide (Millicarb®)
4,0 Teile Luvatol MK 35 (MgO-Paste)

Diese Mischung wurde mit Hilfe einer Versuchs-SMC-Anlage zu einem flächigen Halbzeug verarbeitet, das 38 % geschnittene Glasfaserrovings (2,5 cm lang) enthielt und zwischen Polyethylenabdeckfolien 4 Tage bei 23 °C gelagert wurde. Nach Entfernen der Abdeckfolien wurde das klebfreie Halbzeug in einem beheizten Plattenwerkzeug (polierter Stahl, Abmessungen 0,4 x 58 x 25 cm) bei 145 °C 5 min unter 80 bar verpreßt. Es resultierte ein gehärteter Formstoff mit glatter, glänzender Oberfläche, der folgende Eigenschaften aufwies:

| | |
|---|---|
| Biege-E-Modul: (DIN 53 457) | 13.7 [kN/mm$^2$] |
| Biegefestigkeit: (DIN 53 452) | 265 [N/mm$^2$] |
| Randfaserdehnung: (DIN 53 452) | 2.8 [%] |
| Schlagzähigkeit: (DIN 53 453) | 119 [kJ/m$^2$] |

c2) Eine Harz-Füllstoffmischung wurde aus folgenden Komponenten mit einem schnell laufenden Rührwerk hergestellt:

72 Teile Harz A2
18 Teile Harz B2
4 Teile Polymer C2
1,5 Teile tert.-Butylperbenzoat
4,5 Teile Zinkstearat
3,0 Teile amorphe Kieselsäure (Aerosil®)

0,03 Teile p-Benzochinon
100 Teile Füllstoff Kreide (Millicarb®)
3,5 Teile Luvatol MK 35 (MgO-Paste)
Diese Mischung wurde mit Hilfe einer Versuchs-SMC-Anlage zu einem SMC verarbeitet, das 27.5 % geschnittene Glasfaserrovings (2,5 cm lang) enthielt und zwischen Polyethylenfolien bei 23 °C 7 Tage gelagert wurde. Nach Entfernen der Abdeckfolien wurde das klebfreie Halbzeug in einem beheizten, polierten Stahlwerkzeug (Plattenform, 0,4 x 58 x 25 cm) bei 145 °C 5 min unter 80 bar verpreßt. Es resultierte ein gehärteter Formstoff mit glatter und glänzender Oberfläche, der folgende Eigenschaften zeigte:

| | |
|---|---|
| Biege-E-Modul: | 12.3 [$kN/mm^2$] |
| Biegefestigkeit: | 209 [$N/mm^2$] |
| Randfaserdehnung: | 2.56 [%] |
| Schlagzähigkeit: | 85 [$kJ/m^2$] |

d) Zur Ermittlung der Rißzähigkeit eines erfindungsgemäßen Formstoffes wurde folgende Mischung herstellt:
64 Teile Harz A4
16 Teile Harz B1
8 Teile Polymer C2 in 12 Teilen Styrol
1,5 Teile tert.-Butylperbenzoat
3,75 Teile Luvatol MK 35 (MgO-Paste)
Diese Mischung wurde in ein Plattenwerkzeug (0,4 x 21 x 21 cm) eingefüllt, 3 Tage bei 23 °C gelagert und anschließend zuerst bei 80 °C (3 Stunden) und danach 16 Stunden bei 125 °C gehärtet.

Zum Vergleich wurde Harz A4, welches mit Magnesiumoxid allein nicht einzudicken ist, mit folgender Initiatormischung bei Raumtemperatur gehärtet (3 h) und anschließend bei 125 °C 16 Stunden getempert:
100 Teile Harz A4
2 Teile Methylethylketon LA3
1 Teil Co-Beschleuniger (1 %ig an $Co^{++}$)
1 Teil tert.-Butylperbenzoat
Der gehärtete Formstoff wies die Abmessungen 0,4 x 21 x 21 cm auf.

Die Bruchzähigkeit beider Formstoffe wurde nach ASTM E-399 ermittelt. Die Ergebnisse sind in Tabelle 4 zusammengefaßt.

Tabelle 4

| Formstoff | erfindungsgemäß | Vergleich |
|---|---|---|
| $K_{IC}$ [$Mpa \cdot m^{1/2}$] | 1.180 | 0.701 |
| $G_{IC}$ [$J \cdot m^{-2}$] (errechnet) | 362.15 | 122.58 |
| E-Modul [$N/mm^2$] | 3840 | 4035 |

## Patentansprüche

**1.** Härtbare, eingedickte Formmasse, enthaltend

A. 100 Gew.-Teile eines Vinylester- oder Vinylesterurethanharzes, welches Vinylesterendgruppen der Formel

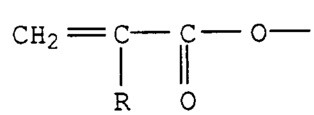

(mit R = H oder $CH_3$) enthält und frei von Carboxylgruppen ist,

B. 0 bis 120 Gew.-Teile eines mit A verträglichen ungesättigten Polyesterharzes,

C. 0,5 bis 25 Gew.-Teile eines mit A verträglichen, Säuregruppen enthaltenden thermoplastischen Vinylpolymeren mit einer Säurezahl (nach DIN 53 402) zwischen 15 und 150 und einem K-Wert (nach DIN 51 562, Teile 1 und 3) zwischen 15 und 60,

D. 0,1 bis 10 Gew.-Teile einer basischen Metallverbindung als Eindickmittel,

E. 0,01 bis 5 Gew.-Teile eines bei Temperaturen von 50 °C in Radikale zerfallenden Polymerisationsinitiators,

F. 0 bis 400 Gew.-Teile Verstärkungsfasern und/oder Füllstoffe,

sowie gegebenenfalls

G. weitere Zusatzstoffe.

**2.** Formmasse nach Anspruch 1, dadurch gekennzeichnet, daß das Vinylester- bzw. Vinylesterurethanharz A als flüssiges Reaktivsystem in Mischung mit bis zu 60 Gew.-% vorzugsweise 10 bis 45 Gew.-% eines copolymerisierbaren Monomeren vorliegt.

**3.** Formmasse nach Anspruch 1, dadurch gekennzeichnet, daß die Komponente A ein Vinylesterharz ist, welches die Gruppe

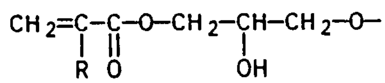

(mit R = H oder $CH_3$) aufweist.

**4.** Formmasse nach Anspruch 1, dadurch gekennzeichnet, daß die Komponente A ein Vinylesterurethanharz ist, welches folgende Gruppen aufweist:

a)

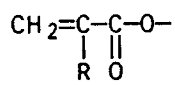

(mit R = H oder $CH_3$),

b)

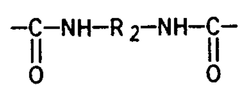

(mit $R_2$ = zweiwertiger Rest mit 4 bis 40 C-Atomen)

c) gegebenenfalls $-O-R_3-O-$

(mit $R_3$ = zweiwertiger Rest mit 2 bis 500 C-Atomen)

d) gegebenenfalls $-NH-R_4-NH-$

(mit $R_4$ = zweiwertiger Rest mit 2 bis 100 C-Atomen).

**5.** Verfahren zur Herstellung der Formmasse nach Anspruch 1, dadurch gekennzeichnet, daß man die Komponenten A, B, C, E, F und G vermischt, bei Temperaturen unterhalb von 50 °C die Komponente D zusetzt und dadurch die Eindickung einleitet, gegebenenfalls die noch fließfähige Masse auf Verstärkungsfasern aufbringt, und dann die Eindickung, gegebenenfalls durch Erwärmen, zu Ende führt.

**6.** Verwendung der Formmasse nach Anspruch 1 zur Herstellung von Formteilen durch Pressen, Spritzpressen, Spritzgießen oder Tiefziehen und anschließendes Aushärten bei Temperaturen oberhalb von 50 °C, vorzugsweise zwischen 80 und 200 °C.

## Claims

**1.** A curable, thickened molding material containing

A. 100 parts by weight of a vinyl ester or vinyl ester urethane resin which contains terminal vinyl ester groups of the formula

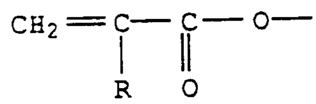

(where R is H or $CH_3$) and is free of carboxyl groups,

B. from 0 to 120 parts by weight of an unsaturated polyester resin compatible with A,

C. from 0.5 to 25 parts by weight of a thermoplastic vinyl polymer which is compatible with A, contains acid groups and has an acid number (according to DIN 53 402) of from 15 to 150 and a K value (according to DIN 51 562, Parts 1 and 3) of from 15 to 60,

D. from 0.1 to 10 parts by weight of a basic metal compound as a thickener,

E. from 0.01 to 5 parts by weight of a polymerization initiator decomposing into free radicals at 50 °C,

F. from 0 to 400 parts by weight of reinforcing fibers and/or fillers

and, if required,

G. further additives.

**2.** A molding material as claimed in claim 1, wherein the vinyl ester or vinyl ester urethane resin A is present in the form of a liquid reactive system, as a mixture with up to 60, preferably from 10 to 45, % by weight of a copolymerizable monomer.

**3.** A molding material as claimed in claim 1, wherein component A is a vinyl ester resin which has the group

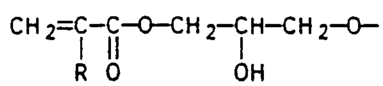

(where R is H or $CH_3$).

**4.** A molding material as claimed in claim 1, wherein component A is a vinyl ester urethane resin which has the following groups:

a)

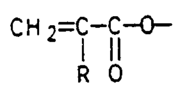

(where R is H or $CH_3$)

b)

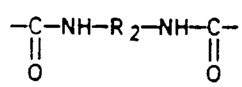

(where $R_2$ is the divalent radical of 4 to 40 carbon atoms)

c) if required -O-$R_3$-O-
(where $R_3$ is the divalent radical of 2 to 500 carbon atoms)
d) if required -NH-$R_4$-NH-
(where $R_4$ is the divalent radical of 2 to 100 carbon atoms).

**5.** A process for the preparation of a molding material as claimed in claim 1, wherein components A, B, C, E, F and G are mixed, component D is added at below 50 °C and the thickening is thus initiated, if necessary the still flowable material is applied to reinforcing fibers and the thickening is then completed, if necessary by heating.

**6.** Use of a molding material as claimed in claim 1 for the production of moldings by pressing, transfer molding, injection molding or deep-drawing and subsequent curing at above 50 °C, preferably from 80 to 200 °C.

## Revendications

**1.** Matière à mouler épaissie, durcissable, contenant
A. 100 parties en poids d'une résine vinylester ou vinylesteruréthane, qui contient des groupes d'extrémité vinylester de la formule

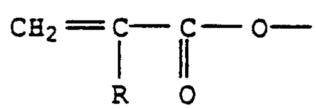

(avec R = H ou $CH_3$), et qui est exempte de groupes carboxyle.
B. 0 à 120 parties en poids d'une résine polyester insaturée compatible avec A.
C. 0,5 à 25 parties en poids d'un polymère vinylique thermoplastique, contenant des groupes acide compatible avec A, et d'un indice d'acide (selon DIN 53402) compris entre 15 et 150 et un indice K (selon DIN 51562, parties 1 et 3) compris entre 15 et 60.
D. 0,1 à 10 parties en poids d'un composé métallique basique comme épaississant.
E. 0,1 à 5 parties en poids d'un initiateur de polymérisation se divisant en radicaux à des températures de 50 °C.
F. 0à 400 parties en poids de fibres de renforcement et/ou charges ainsi qu'éventuellement
G. d'autres additifs.

**2.** Matières à mouler selon la revendication 1, caractérisé par le fait la résine vinylester ou vinylesteruréthane se présente sous forme de système réactif fluide en mélange avec jusqu'à 60 % en poids, de préférence de 10 à 45 % en poids, d'un monomère copolymérisable.

**3.** Matières à mouler selon la revendication 1, caractérisé par le composant A et une résine vinylester, qui possède le groupe

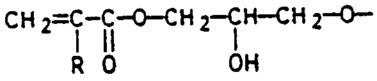

(avec R = H ou $CH_3$).

**4.** Matières à mouler selon la revendication 1, caractérisé par le fait que le composant A est une résine vinylesteruréthane qui possède les groupes suivants :

a)

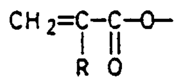

(avec R = H ou $CH_3$),

b)

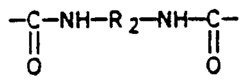

(avec $R_2$ = reste bivalent de 4 à 40 atomes C)

c) éventullement -O-$R_3$-O-

(avec $R_3$ = reste bivalent de 2 à 500 atomes C)

d) éventuellement -NH-$R_4$-NH-

(avec $R_4$ = reste bivalent de 2 à 100 atomes C).

**5.** Procédé de préparation de matières à mouler selon la revendication 1, caractérisé par le fait que l'on mélange les composants A, B, C, E, F et G, qu'on ajoute le composant D à des températures inférieures à 50 °C et de ce fait amorce l'épaississement, qu'on applique éventuellement la masse, qui peut encore couler, sur des fibres de renforcement, et puis on mène à sa fin l'épaississement, éventuellement par chauffage.

**6.** Utilisation des matières à mouler selon la revendication 1, pour la fabrication de pièces de forme par pressage, extrusion, moulage ou emboutissage profond et ensuite vieillissement à des températures supérieures à 50 °C de préférence entre 80 et 200 °C.